# EUROPEAN PATENT APPLICATION

(11) **EP 1 577 829 A1**
(43) Date of publication of application: **21.09.2005**
(21) Application number: 03736101.1
(22) Date of filing: 09.06.2003
(51) Int. Cl.: G06K 19/077, G06K 19/07

(54) **IC CHIP, CARD AND MOBILE TERMINAL CONNECTED TO THE SAME**

(30) Priority: 10.06.2002 JP 2002169337
(71) Applicant: Sakamura, Ken, Tokyo 141-0032 (JP); Koshizuka, Noboru, Tokyo 180-0013 (JP); NTT DoCoMo, Inc., Tokyo 100-6150 (JP)
(72) Inventor: SAKAMURA, Ken, Shinagawa-ku, Tokyo 141-0032 (JP); KOSHIZUKA, Noboru, Musashino-shi, Tokyo 180-0013 (JP); MORI, Kensaku, IPD NTT DoCoMo, Inc., Chiyoda-ku, Tokyo 100-6150 (JP); ISHII, Kazuhiko, IPD NTT DoCoMo, Inc., Chiyoda-ku, Tokyo 100-6150 (JP); AONO, Hiroshi, IPD NTT DoCoMo, Inc., Chiyoda-ku, Tokyo 100-6150 (JP); HONGO, Sadayuki, IPD NTT DoCoMo, Inc., Chiyoda-ku, Tokyo 100-6150 (JP)
(74) Representative: Maury, Richard Philip
(86) International application number: PCT/JP2003/007277
(87) International publication number: WO 2003/105079

(57) **Abstract**

One IC chip capable of performing both the contact and contactless functions is disclosed. A card and mobile terminal device is disclosed for enabling the IC chip to function as a contact or contactless IC card.

The IC chip comprises a CPU; a contact interface connected to the CPU, for enabling data communications with the outside; and a contactless interface connected the CPU for enabling data communications with the outside. The card connectable to the contactless interface of the IC chip includes an antenna, and the antenna being connectable to the contactless interface of the IC chip to enable the IC chip to radio-communicate with the outside. The mobile terminal device connectable to the contact interface of the IC chip includes another CPU, which is connectable to and in communication with the contact interface of the IC chip to make the IC chip function as a contact IC chip.

## Description

### TECHNICAL FIELD

The present invention generally relates to an IC chip, a card and a mobile terminal device connectable to the IC chip, and particularly relates to IC chips capable of performing both contact and contactless functions, cards and mobile terminal devices therefore.

### BACKGROUND ART

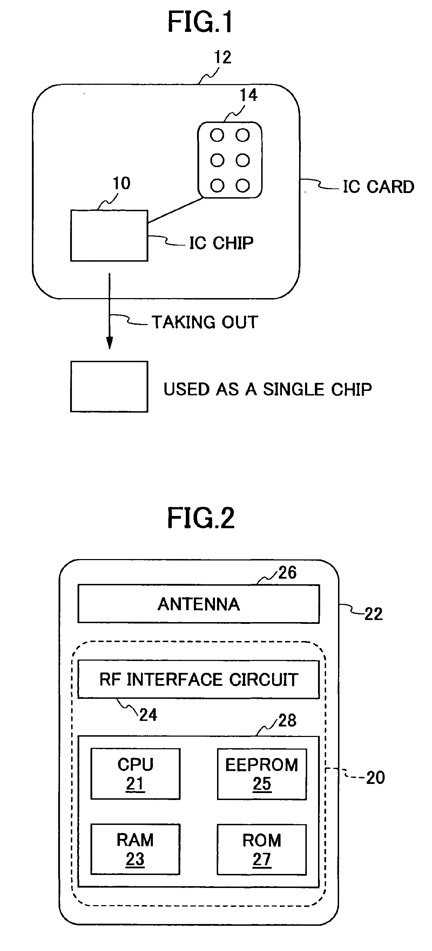

There are two kinds of so called "IC cards" or "smart cards", a contact IC card and a contactless IC card depending on how to communicate data with a reader/writer. As shown in Fig. 1, a contact IC card 12 has a built-in IC chip 10. Inside of the IC chip 10, a CPU, ROM, RAM and EEPROM (not shown) are provided to perform inputting/outputting and processing of information. The chip 10 needs to have a nonvolatile and writable memory device, EEPROM, which can maintain stored contents without power. The contact IC card 12 has an electric contact 14 mounted on a surface thereof. When the IC card 12 is inserted into a reader/writer (not shown), the contact 14 connects to an interface of the reader /writer to read/write information from/to the IC card 12.

As shown in Fig. 2, a contactless IC card 22 has a built-in IC chip 20. The IC chip 20 has a microprocessor 28. The microprocessor 28 comprises a CPU 21, ROM 27, RAM 23 and EEPROM 25 to perform information processing. The IC chip 20 further comprises an RF interface circuit 24. The IC chip 20 can perform contactless communication (ISO14443) with an external reader/writer, via a coil antenna 26 built in the IC card 22. Power to the IC chip 20 is supplied via the antenna 26 from the outside. The contactless IC card 22 has advantages of less procedure and less occurrence of physical faults when communicating with a reader/writer.

A combination type IC card or hybrid type IC card is known, which has both functions of contact IC card and contactless IC card.

As shown in Fig. 1, by taking out only the IC chip 10 from the IC card 12 and utilizing it, it is possible to make the function of the contact IC card in the form of a single chip.

On the other hand, it has been impossible to make the function of the contactless IC card using the IC chip 20 in the form of a single chip, because the antenna cannot be miniaturized and technical problems resulting from enlarging the slot portion cannot be solved. Accordingly, there is not known one card capable of being used as both contact and contactless IC cards.

Japanese Patent Laid-open Publications 2000-113148, 2000-113148 and 2001-172814 disclose prior art IC cards having both the functions of contact and contactless communication, and other prior technologies.

### DISCLOSURE OF THE INVENTION

It is a general object of the present invention to provide an IC chip with a dual interface function for performing contactless and contact communication. Another object is to provide a card and a mobile terminal device connectable to such an IC chip for enabling the IC chip to function as a contact IC card and a contactless IC card.

Features and advantages of the present invention are set forth in the description that follows, and in part will become apparent from the description and the accompanying drawings, or may be learned by practice of the invention according to the teachings provided in the description. Objects as well as other features and advantages of the present invention will be realized and attained by the IC chip, the card and the mobile terminal device particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides as follows:
an IC chip, comprising a CPU; a contact interface connected to the CPU, for enabling data communications with the outside; and a contactless interface connected to the CPU for enabling data communications with the outside;
a card connectable to the contactless interface of the IC chip comprising an antenna; the antenna being connectable to the contactless interface of the IC chip to enable the IC chip to radio-communicate with the outside; and
a mobile terminal device connectable to the contact interface of the IC chip comprising another CPU; the another CPU being connectable to and able to communicate with the contact interface of the IC chip to make the IC chip function as a contact IC chip.

### BRIEF DESCRIPTION OF THE DRAWINGS

Fig. 1 shows a conventional contact IC card.
Fig. 2 shows an internal structure of a conventional contactless IC card.
Fig. 3 shows an IC chip according to a first embodiment of the present invention.
Fig. 4 shows a card according to a second embodiment of the present invention.
Fig. 5 shows a mobile terminal device according to a third embodiment of the present invention.
Fig. 6 shows a mobile terminal device according to a fourth embodiment of the present invention.

### BEST MODE FOR CARRYING OUT THE INVENTION

In the following, embodiments of the present invention are described with reference to the accompanying drawings.

### [First embodiment]

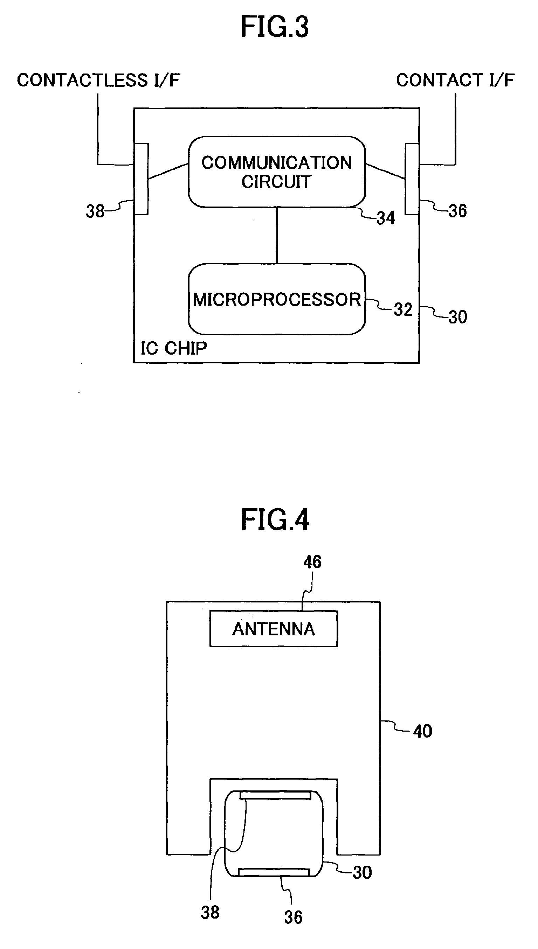

Fig. 3 shows an example of an IC chip 30 having contact and contactless dual interfaces according to a first embodiment of the present invention. The IC chip 30 comprises a microprocessor 32 and a communication circuit 34. Within the microprocessor 32, as shown in Fig. 2 for example, a CPU, a ROM, a RAM and an EEPROM are provided to read or write data. The communication circuit 34 has an RF interface circuit (not shown) and performs both communicating functions for contact IC card communication and contactless IC card communication. The IC chip 30 further comprises a contact interface 36 (such as ISO 7816) and contactless interface 38 (such as ISO 14443) at opposing sides. The IC chip 30 is merely a chip and therefore comprises no antenna.

### [Second embodiment]

In a second embodiment shown in Fig. 4, when the contactless interface side 38 of the IC chip 30 is inserted into a card 40 having an antenna 46, the contactless interface side 38 is connected to the antenna 46 of the card 40, and functions as a contactless IC card as a whole. The contactless IC card performs contactless communication with an outside reader/writer, and reads and writes data into and from the IC chip 30.

While the IC chip 30 remains inserted in the card 40, it can function as a contact IC card using the exposed contact interface 36. That is, by being used together with the card 40, one dual interface chip 36 can function as both contact and contactless IC cards.

### [Third embodiment]

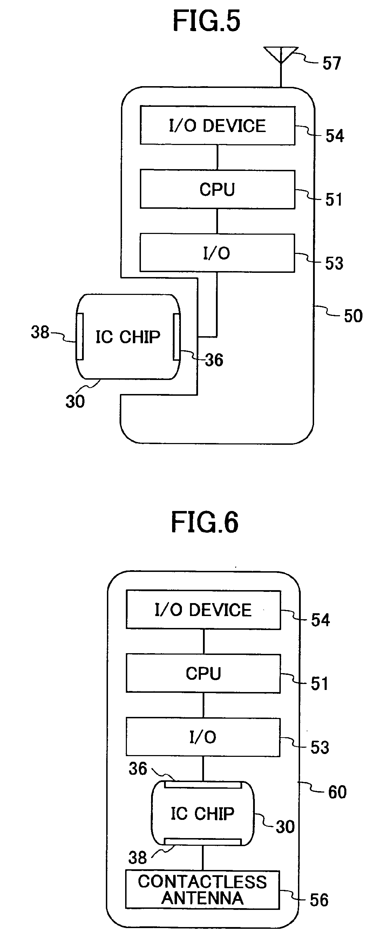

In a third embodiment shown in Fig. 5, when the IC chip 30 is inserted into a mobile terminal 50, the contact interface 36 of the IC chip 30 is connected via an I/O circuit 53 to a CPU 51. Then the IC chip 30 functions as a contact IC card within the mobile terminal 50. In more detail, first, the contact interface side 36 of the IC chip 30 is inserted into an IC chip insert inlet of the mobile terminal 50. Then both interfaces of the IC chip 30 and the mobile terminal 50 are in communication with each other, and therefore data can be read/written from the mobile terminal 50 to the IC chip 30. Since the mobile terminal 50 has an antenna 57, the IC chip 30 can perform contactless communication via the contactless interface 36 and the antenna 57.

Users can read/write data from/to the IC chip 30 and can display data utilizing an input/output device 54.

In order to protect the IC chip 30 against miss-connection when the contactless interface side 38 is mistakenly inserted and connected to the I/O circuit 53 of the mobile terminal 50, the IC chip may have a predetermined physical asymmetric shape (not shown), and the inlet of the mobile terminal 50 also may have a physical complementary shape. In this manner, the IC chip 30 cannot be inserted by the wrong side.

### [Fourth embodiment]

In a fourth embodiment shown in Fig. 6, when the IC chip 30 is mounted in a mobile terminal 60, the contact interface 36 of the IC chip 30 is connected via an I/O circuit 53 to a CPU 51, and the IC chip 30 can perform as a contact IC card within the mobile terminal 60. Users can read/write data from/to the IC chip 30 and can display data utilizing an input/output device 54. Since the contactless interface 38 of the IC chip 30 can be connected to contactless antenna 56 of the mobile terminal 60, the mobile terminal 60 can perform as a contactless IC card.

In order to protect the IC chip 30 against miss-connection when the contactless interface side 38 is mistakenly connected to an I/O circuit 53 of the mobile terminal 60, the IC chip may have a predetermined physical asymmetric shape (not shown), and the mobile terminal 60 also may have a physical complementary shape. In this manner, the IC chip 30 cannot be inserted at the wrong side.

As mentioned above, according to the embodiments of the present invention, one IC chip can perform both the contact and contactless functions. By selecting a device for connecting to the IC chip, users can easily select either of contact communication or contactless communication as a main function. By inserting such an IC chip into a mobile terminal, it becomes possible to read data in the IC chip and download data from the network via the mobile terminal communication function. On the other hand, by inserting such an IC chip into a card with antenna, it can be utilized as a contactless IC card at ticket examination machines, etc.

Further, the present invention is not limited to these embodiments, but variations and modifications may be made without departing from the scope of the present invention.

## Claims

1. An IC chip, comprising:
a CPU;
a contact interface connected to the CPU, for enabling data communications with outside; and
a contactless interface connected to the CPU for enabling data communications with the outside.

2. The IC chip as claimed in Claim 1, wherein the contact interface is connectable to an external electronic device so that the IC chip communicates with the external electronic device via the contact interface.

3. The IC chip as claimed in Claim 2, wherein the contactless interface is connectable to an external radio device so that the IC chip radio-communicates with the radio device via the contactless interface.

4. The IC chip as claimed in Claim 3, wherein the contact interface and the contactless interface are provided at different locations.

5. The IC chip as claimed in Claim 4, further comprising:
a physical shape for avoiding miss-connection with the external electronic device or the external radio device.

6. A card connectable to the contactless interface of the IC chip as claimed in Claim 1, comprising:
an antenna; wherein
the antenna is connectable to the contactless interface of the IC chip to enable the IC chip to radio-communicate with the outside.

7. The card as claimed in Claim 6, wherein the card is capable of functioning as a contactless IC card by receiving the IC chip.

8. A mobile terminal device connectable to the contact interface of the IC chip as claimed in Claim 1, comprising:
a second CPU; wherein
the second CPU is connectable to and in communication with the contact interface of the IC chip to make the IC chip function as a contact IC chip.

9. A mobile terminal device connectable to the contact interface of the IC chip as claimed in Claim 5, comprising:
a second CPU;
the second CPU being connectable to and in communication with the contact interface of the IC chip to make the IC chip function as a contact IC chip; and
a physical shape complementary to the physical shape of the IC chip for avoiding miss-connection to the contactless interface of the IC chip.

10. The mobile terminal device as claimed in Claim 8, further comprising:
an antenna; wherein
the antenna is connectable to the contactless interface of the IC chip to enable the IC chip to radio-communicate with the outside.
